# EUROPÄISCHE PATENTSCHRIFT

(11) **EP 0 401 592 B1**
(45) Veröffentlichungstag und Bekanntmachung des Hinweises auf die Patenterteilung: **10.03.1993**
(21) Anmeldenummer: 90109747.7
(22) Anmeldetag: 22.05.1990
(51) Int. Cl.: A01B 29/04, B60C 17/06

(54) **Bodenwalze**
Ground roller
Rouleau agricole

(30) Priorität: 08.06.1989 DE 3918751
(43) Veröffentlichungstag der Anmeldung: 12.12.1990
(73) Patentinhaber: Amazonen-Werke H. Dreyer GmbH & Co. KG, D-49205 Hasbergen (DE)
(72) Erfinder: Reinke, Wilfried, D-2900 Oldenburg (DE)

(56) Entgegenhaltungen:
- EP-A- 245 648
- EP-A- 0 223 134
- EP-A- 0 367 992
- DE-A- 1 680 531
- DE-B- 1 022 483
- GB-A- 738 112
- US-A- 3 610 308

## Beschreibung

Die Erfindung betrifft eine Bodenwalze gemäß des Oberbegriffes des Patentanspruches 1.

Eine derartige Bodenwalze ist beispielsweise durch die EP-A-2 45 648 bekannt. Bei dieser Bodenwalze sind im Inneren der Gummihohlreifen Abstützkörper zum Abstützen der Reifen beim Abrollen auf der Bodenoberfläche angeordnet, um so verdichtete Streifen im Boden durch die Abstützringe zu erreichen. Hierbei weisen die Abstützringe einen Abstand zum Reifeninneren der Lauffläche auf, damit die Reifen entsprechend walken können. Dadurch, daß separate Abstützringe in die Reifen montiert werden müssen und dann Reifen und Abstützringe gemeinsam auf den Tragkörper aufgeschoben werden müssen, ist die Monage relativ aufwendig.

Der Erfindung liegt die Aufgabe zugrunde, unter Beibehaltung der Vorteile der bekannten Walzen, die Ausbildung der Reifen und Stützkörper der Bodenwalze wesentlich zu vereinfachen.

Diese Aufgabe wird erfindungsgemäß durch die kennzeichnenden Maßnahmen des Anspruches 1 gelöst.

Hierzu wird zunächst die Grundvoraussetzung dazu geschaffen, daß die Seitenwände der Reifen relativ verformungssteif ausgebildet sein können, so daß sie gleichzeitig die Funktion der bekannten Abstützringe übernehmen können, um die verdichteten Bodenstreifen erreichen zu können. Gleichzeitig wird jedoch durch die Walkzone zwischen den relativ verformungssteifen Seitenwänden und der Lauffläche das die gute Selbstreinigung der Walze gewährleistet. Hierbei wird in bevorzugter Weise die Walkzone dadurch gebildet, daß die Seitenwände im Querschnitt des Reifens gesehen, U-förmig in die Lauffläche übergehen. Eine besonders gute Selbstreinigung der weiter innen liegenden Reifenteile läßt sich dadurch erreichen, daß der Innenrand des Reifens U-förmig in die Seitenwand übergeht.

In bevorzugter Weise ist erfindungsgemäß vorgesehen, daß der aufrechte Teil der Seiten verhältnismäßig verformungssteif ausgebildet ist, und zwar derart, daß er als Abstützelement dient und eine streifenförmige Bodenverdichtung hervorruft. Infolge dieser Maßnahme sind die Abstützkörper in die Seitenwände des Reifens integriert. Hierbei ist vorgesehen, daß im entspannten Zustand des Reifens das Maß des Abstandes der Seitenwände des Reifens zueinander kleiner ist, als die Breite der Lauffläche. Die große Walkarbeit der Reifen und die damit verbundene gute Selbstreinigung der Bodenwalze wird dadurch erreicht, daß die Seitenwände des Reifens aufrecht laufen und mittels eines U-förmigen Abschnittes in die Lauffläche übergehen.

Um eine sehr einfache Montage, ohne separate Distanzelemente zwischen benachbarten Reifen verwenden zumüssen, ist erfindungsgemäß vorgesehen, daß an dem äußeren Innenrand jeweils die Distanzelemente einstückig an dem Reifen angeordnet sind.

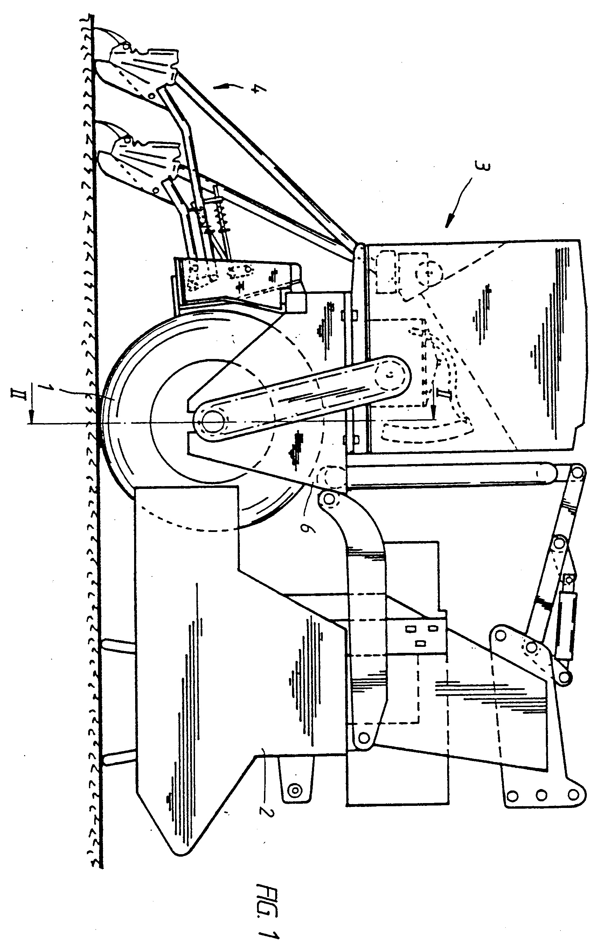

Weitere Einzelheiten der Erfindung sind der Beispielsbeschreibung und den Zeichnungen zu entnehmen. Hierbei zeigen
Fig. 1 eine Bodenbearbeitungskombination mit einer erfindungsgemäßen Nachlaufwalze in Seitenansicht und
Fig. 2 die Nachlaufwalze gemäß Fig. 1 im Teilschnitt und in vergrößerter Darstellung gemäß Ansicht II-II.

Die Bodenwalze 1 ist Bestandteil einer landwirtschaftlichen Gerätekombination. Diese landwirtschafliche Gerätekombinaton besteht aus der schleppergezogenen und zapfwellenangetriebenen Kreiselegge 2, der hinter der Kreiselegge 2 angeordneten Nachlaufwalze 1, auf welcher die Sämaschine 3 mit den Säscharen 4 aufgesattelt ist. Die Bodenwalze 1 bestimmt die Eindringtiefe der Bodenbearbeitungswerkzeuge der Kreiselegge 2 in den Boden.

Die Bodenwalze 1 weist den als sich quer zur Fahrtrichtung erstreckenden und als Rohr 5 ausgebildeten Tragkörper auf. Der Tragkörper 5 ist in bekannter und daher nicht näher dargestellter Weise am Rahmen 6 mittels Lager drehbar gelagert. Auf dem Tragrohr 5 sind die Gummihohlreifen 7 nebeneinander angeordnet. Die Gummihohlreifen 7 stützen sich mit ihren Innenrändern 8 auf dem Tragrohr 5 ab. Die Gummihohlreifen 7 sind in bekannter und daher nicht näher dargestellter Weise axial auf dem Tragrohr 5 festgelegt und über zwischen ihnen angeordnete Distanzelemente 9 im Abstand zueinander angeordnet. Die Distanzelemente 9 sind an dem äußeren Innenrand der Gummihohlreifen 7 einstückig an dem Reifen angeordnet.

Die Gummihohlreifen 7 weisen die aufrecht verlaufenden Seitenwände 10 auf. Die Seitenwände 10 sind verhältnismäßig verformungssteif ausgebildet. Sie weisen im Querschnitt vorzugsweise einen trapezförmigen Querschnitt auf, wobei die breitere Seite der Trapezes zum Tragrohr hingerichtet ist. Die Seitenwand 10 des Gummireifens 7 geht über das U-förmige Zwischenstück 11 in die Lauffläche 12 über. Dieses U-förmige Zwischenstück 11 bildet die zwischen der Lauffläche 12 und der Seitenwand 10 sich befindliche Walkzone 13. Es ist auch möglich, noch zwischen dem Distanzelement 9 und der Seitenwand 10 einen nicht dargestellten U-förmigen Zwischenbereich ähnlich dem Zwischenbereich 11 vorzusehen. Um eine ausreichende axiale Sicherung der Gummireifen 7 auf dem Tragrohr 5 zu gewährleisten, ist zwischen den Innenseiten der Seitenwände 10 noch das innere Distanzstück 14 angeordnet.

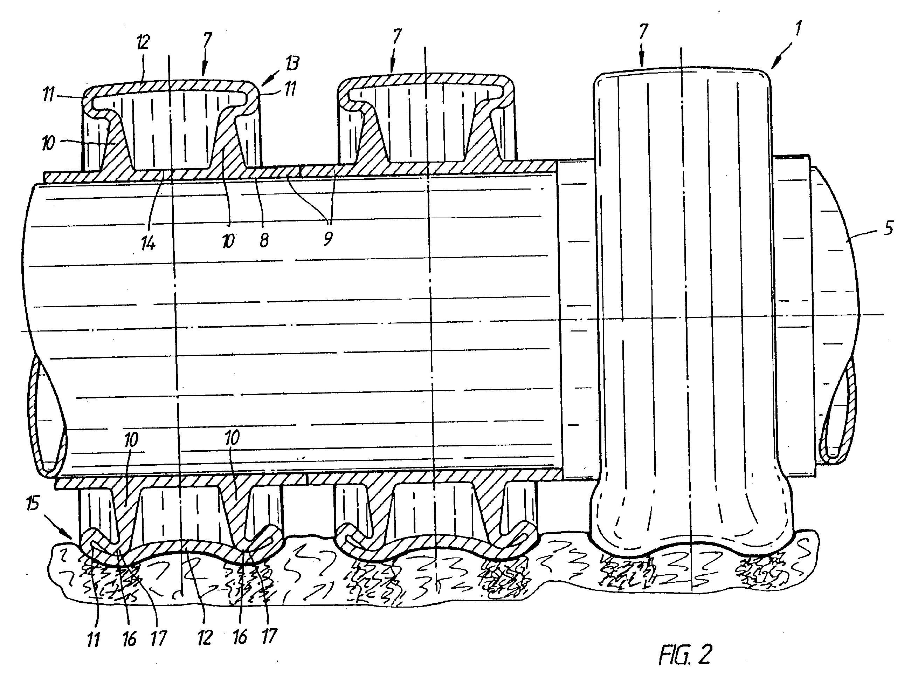

Beim Abrollen der Gummihohlreifen 7 der Bodenwalze 1 auf der Bodenoberfläche 15 wird die U-förmig ausgebildete Walkzone 13 zusammengedrückt. Die Lauffläche 12 stützt sich dann im Bereich 16 auf der äußeren umlaufenden Ringfläche 17 der Seitenwände 10 ab. Aufgrund der verhältnismäßig verformungssteifen Seitenwände 10 dient die Seitenwand 10 als Stützkörper für die Lauffläche 12 und ruft somit eine streifenförmige Bodenverdichtung, wie in Figur 2 durch die unterschiedlich starke Schraffur angedeutet wird, hervor. Nach dem Abrollen der Lauffläche 12 auf der Bodenoberfläche 15 entspannt sich der Reifen 7 wieder (walken des Reifens), so daß automatisch durch die Verformung und das Walken des Reifens 7 eine Selbstreinigung des Reifens 7 von evtl. anhaftenden Bodenteilchen erreicht wird.

## Patentansprüche

1. Bodenwalze, bestehend aus auf einem Tragkörper (5) nebeneinander angeordneten Gummihohlreifen (7), die sich mit den Innenrändern (8) ihrer Seitenwände (10) auf dem Tragkörper (5) abstützen und axial auf den Tragkörper (5) festgelegt sind wobei die Laufflächen (12) der nebeneinander angeordneten Reifen (7) über zwischen den Seitenwänden (10) angeordneten Distanzelemente (9) in einem Abstand zueinander angeordnet sind, dadurch gekennzeichnet, daß die Seitenwände (10) der Reifen (7) aufrecht verlaufen und im unbelasteten Zustand mittels eines U-förmigen Abschnittes (11) in die Lauffläche (12) übergehen, wobei diese Übergangszone die Walkzone (13) bildet, daß der aufrechte Teil der Seitenwand (10) verhältnismäßig verformungssteif ausgebildet ist und zwar derart, daß der aufrechte Teil der jeweiligen Seitenwand (10) als Abstützelement ausgebildet ist.

2. Bodenwalze nach Anspruch 1, dadurch gekennzeichnet, daß an dem äußeren Innenrand jeweils die Distanzelemente (9) einstückig an dem Reifen (7) angeordnet sind.

3. Bodenwalze nach Anspruch 1, dadurch gekennzeichnet, daß die Seitenwände (10) des Reifens (7) einen trapezförmigen Querschnitt aufweisen, wobei die breitere Seite des aufrechten und schmalen Trapezes dem Tragkörper (5) zugewandt ist.

## Claims

1. Ground roller, including hollow rubber tyres (7), which are disposed adjacent one another on a carrier member (5), are supported on the carrier member (5) by the inner edges (8) of their side walls (10) and are axially secured on the carrier member (5), the tread surfaces (12) of the adjacently situated tyres (7) being spaced apart from one another by means of spacer members (9), which are disposed between the side walls (10), characterised in that the side walls (10) of the tyres (7) extend upwardly and into the tread surface (12) by means of a U-shaped portion (11) in the unloaded state, this transitional area forming the resilient area (13), and in that the upwardly extending part of the side wall (10) is relatively resistant to deformation so that the upwardly extending part of the respective side wall (10) forms a supporting means.

2. Ground roller according to claim 1, characterised in that the spacer members (9) are each disposed outermost on the respective inner edge so as to be integral with the tyre (7).

3. Ground roller according to claim 1, characterised in that the side walls (10) of the tyre (7) have a trapezoidal cross-section, the wider end of the upwardly extending and narrow trapezium facing the carrier member (5).

## Revendications

1. Rouleau agricole composé de pneumatiques creux (7) placés de manière juxtaposée sur un organe de support (5), ces pneumatiques s'appuyant sur l'organe de support (5) par les bords intérieurs (8) de leurs flancs (10) en étant fixés axialement sur l'organe de support (5) et les surfaces de roulement (12) des pneumatiques (7) juxtaposés, sont prévues à une certaine distance les unes des autres par des éléments d'écartement (9) prévus entre les flancs (10), rouleau caractérisé en ce que les flancs (10) des pneumatiques (7) sont droits et, à l'état non chargé, les flancs rejoignent la surface de roulement (12) par un segment (11) en forme de U, cette zone de transition constituant la zone de foulage (13) et la partie droite des flancs (10) est relativement rigide à la déformation et cela de façon que la partie droite du flanc (10) respectif est en forme d'élément d'appui.

2. Rouleau agricole selon la revendication 1, caractérisé par des éléments d'écartement (9) faisant corps avec le pneumatique (7) au niveau de la partie extérieure du bord intérieur.

3. Rouleau agricole selon la revendication 1, caractérisé en ce que les flancs (10) du pneumatique (7) ont une section trapézoïdale et la grande base de ce trapèze étroit est située du côté de l'organe de support (5).
